# EUROPEAN PATENT SPECIFICATION

(11) **EP 1 133 757 B1**
(45) Date of publication and mention of the grant of the patent: **20.11.2002**
(21) Application number: 99937121.4
(22) Date of filing: 04.08.1999
(51) Int. Cl.: G06T 5/20

(54) **IMAGE PROCESSING METHOD**
BILDVERARBEITUNGSVERFAHREN
PROCEDE DE TRAITEMENT D'IMAGES

(30) Priority: 03.09.1998 RU 98116546
(43) Date of publication of application: 19.09.2001
(73) Proprietor: Semenchenko, Mikhail Grigorievich, St. Petersburg, 194223 (RU)
(72) Inventor: Semenchenko, Mikhail Grigorievich, St. Petersburg, 194223 (RU)
(74) Representative: Viering, Jentschura & Partner
(86) International application number: PCT/RU99/00272
(87) International publication number: WO 00/014684

(56) References cited:
- EP-A- 0 756 247
- US-A- 5 526 446
- US-A- 5 708 693
- ANANDAKUMAR K ET AL: "NONLINEAR FILTERING USING GENERALIZED SUBBAND DECOMPOSITION" PROCEEDINGS OF THE INTERNATIONAL CONFERENCE ON IMAGE PROCESSING. (ICIP),US,LOS ALAMITOS, IEEE COMP. SOC. PRESS,1995, pages 382-385, XP000607766 ISBN: 0-7803-3122-2

## Description

### TECHNICAL FIELD

The present invention relates to the automatics and computation techniques and, more particularly, to methods of the preliminary image processing for sharpening and contrast enhancement.

### BACKGROUND ART

One of the methods known in the prior art is described in the Russian Patent No.2015561, published on 16.04.91, Int. Class G06K 9/40. According to this invention, the image correction is made basing on the analysis of the original image at the processing pixel and the local average value over some neighborhood of this pixel.

The method of that patent smoothes the original image, thus producing the smoothed image containing the low frequency components presenting the image background. Then the smoothed image is subtracted from the original one producing the second image containing high frequency components without background, said second image is then emphasized and added to the smoothed image.

The disadvantage of this method is that it emphasizes not only the useful signal but also the noise containing in high frequency image components, thus degrading the quality of the enhanced image.

The method according to U.S. Patent No. 5,038,388, published on 06.08.91, Int. Class G06K 9/40 smoothes the original image and subtracts the smoothed image from the original one thus producing the second image containing the high frequency image components only. Said second image is then adaptively emphasized so that the scaling factor is then higher than larger is a difference between the processing pixels and its neighborhood. The output image is produced by adding the adaptively emphasized second image to the original image, thus sharpening the image without the noise amplification.

The solution described in this patent does not provide any noise suppression as this method can only emphasize the high frequency image components that may contain a noise.

Furthermore, the disadvantage of this method known in the art is that it fails to improve considerably the sharpness of weak edges as such enhancement requires to emphasize the high frequency image components in the regions where a difference between the processing pixel and its neighborhood is comparable to the noise level. Therefore the edge enhancement in such regions causes the noise emphasis.

According to the image processing method disclosed in U.S. Patent No. 5,381,490, published on 10.01.95, Int. Class G06K 9/40 the largest difference Δ between the processing pixel and its nearest neighbors is calculated. Depending on the magnitude of this difference, one of the three processing modes is selected:
- the edge enhancement by means of emphasis of the high frequency image components if Δ > T₁, here T₁ presents the first pre-defined threshold value;
- reproduction of the original image, if T₂ < Δ < T₁, where T₂ stands for the second pre-defined threshold value.
- the image smoothing to suppress a noise, if Δ < T₂.

The first disadvantage of this method is that it may emphasize the noise selectively if the difference Δ varies around any of the threshold values for some neighboring pixels thus transforming small differences between neighboring pixels into larger ones by involving different processing modes for these neighboring pixels.

Furthermore, this method fails to provide quality enhancement of images with different noise magnitudes without tuning as the threshold values T₁ and T₂ are not selected adaptively.

Another approach to the noise suppression in images is described in U.S. Patent 5,563,963, published on 08.10.96, Int. Class G06K 9/40. The method of this patent operates by selecting a plurality of groups of neighbors for each pixel of the original image, each group being a square containing N x N pixels, here N varies for example from 2 to 21. The processing pixel may be located at any position inside this square group of pixels. The least square best fit plane (the planar approximation) is used then to approximate pixel values in each of selected pixel groups and the new value for the processing pixel and the goodness of fit are computed basing on said approximation for each group.

The target pixel of an enhanced image is produced by the weighted summing of all the new pixel values, the weight of a group is then higher than higher is the goodness of fit for this group.

The disadvantage of this method is that it fails to enhance edges as this method provides the noise smoothing only. Furthermore, this method requires huge computation efforts to build least square approximations by hundreds of groups for each of hundreds of thousands of pixels.

A technique for making low contrast parts of a digital image more perceptible is disclosed in the European Patent EP 0 756 247 A1, published on 29.01.97, Int. Cl. G06T 5/20. This method decomposes the original image into plurality of images in such a way that these images belong to different isotropic frequency bands. Thereat the image presenting the low frequency components of the original image has lower resolution (smaller size) than the image presenting the high frequency components. The emphasis processing is carried out on these images. The degree of emphasis is selected to be lower for pixels having values larger than a predetermined threshold value than for pixels having small values. The output image is assembled from the processed images.

The disadvantage of this method is that it emphasizes noise as well as the useful signal. This method fails to provide the edge detection and enhancement as the isotropic frequency channels are used.

The method disclosed in U.S. Patent 5,739,922, published on 14.04.98, Int. Classes G06K 9/40, H04N 1/40 operates by splitting of the original color image into three isotropic frequency channels: the low frequency image components (LF), the medium frequency components (MF) and the high frequency components (HF). The adaptive emphasis of the HF components and adaptive suppression of the MF components is then carried out, thereat the multipliers for HF and MF image components are then higher than higher is a correlation between at least two of three basic image colors. The enhanced image is obtained by summing LF image components with adaptively suppressed MF components and adaptively emphasized HF image components.

The image processing method and apparatus described in said patent may have the limited application as they are suitable for color images only as the correlation between color components is used for carrying out the image processing.

Furthermore, the noise suppression according to this invention is significantly limited, as the HF image components, that also contain a noise, may be emphasized only and the noise suppression in MF image components is limited because no directional splitting of the original image is used.

The edge detection and enhancement can not be obtained by this method as the isotropic frequency channels are used.

All these disadvantages degrade the quality of enhanced images.

The most relevant image processing method is described in U.S. Patent No. 5,351,305, published on 27.09.94, Int. Class G06K 9/40. According to this patent, a plurality of directionally filtered images is obtained from the original image by applying directional filters in the frequency domain. The enhanced image is then formed by selecting each target pixel either from the directionally filtered image, if the contrast edge is detected nearby the processing pixel or from the original image otherwise. Thereat the contrast edge is detected nearby the processing pixel by generating the standard deviation image and by producing the eigenvector description of this image. The eigenvector length is compared to the predetermined threshold value to detect an edge.

The target pixel is equal to the corresponding pixel of the original image, if the edge was not detected nearby. Otherwise, the target pixel is selected from an image filtered with the most nearly corresponding direction of filtering.

While detecting edges, the eigenvector length may vary around the threshold value for several adjacent pixels. Thereby the neighboring pixels of the enhanced image are selected from different images (the original image and directionally filtered image) thus causing the selective noise emphasis. This emphasis degrades the enhanced image quality.

Furthermore, original images may differ in their noise levels thus requiring different threshold values. This method does not include the adaptive selection of the threshold value and therefore may not provide high quality processing of images with different noise levels.

Provided that the edge is detected nearby, the selection of pixels of the enhanced image is made from one of plurality of directionally filtered images thus causing the complete suppression of all image structures that differ by their direction from the detected edge, notwithstanding that those structures can be clearly seen in the original image.

### DISCLOSURE OF INVENTION

The object of the claimed invention is to provide a method for enhancing the image sharpness and contrast combined with simultaneous noise suppression.

The said objective is achieved in the image processing method, comprising the presentation of the original image as a matrix of the discreet picture elements (pixels), splitting of the original image into n frequency channels, each channel presented by an image matrix of the same size as the original image, the edge detection and assembling of the output image from said n frequency channels taking the detected edges into account, by splitting of the original image into the low frequency channel and n-1 high frequency channels and edge detection by computation in each of n-1 selected high frequency channels of the correlation between processing pixel and its neighboring pixels, followed by the comparison of said correlation value with that for the corresponding pixels in other high frequency channels and with the threshold value for this channel. Basing on the results of comparison, the weighting coefficients are formed for each pixel of each of n-1 high frequency channels, and the assembly of the output image is made by summing each pixel from the low frequency channel with all products of the corresponding (by their location in the image) pixels of n-1 high frequency channels by their weighting coefficients.

The said objective is also achieved by selection of m of n-1 high frequency channels (2<m<=n-1) in such a way that they differ one from another in the direction of principal passing only. Therewithal, the weighting coefficients for any of pixels of any of m high frequency channels is defined basing on the comparison of its correlation value to the threshold value and to the correlation values of the corresponding (by their location in the image) pixels of other m-1 high frequency channels.

The said objective is also achieved by computation of said correlation as a product of the processing pixel value and the weighted sum of its neighbors, said weights being anisotropic thereat the direction of this anisotropy corresponds to the direction of principal passing of the processing channel.

Furthermore, the threshold value for any of n-1 high frequency channels is determined by analysis of distribution of values, or absolute values, of pixels in this channel. The threshold value may be also determined by analysis of distribution of values, or absolute values, of pixels of the original image.

The claimed as the invention image processing method is characterized by the following features that distinguish it from the most relevant method known in the prior art:
1. while splitting the original image into frequency channels, the low frequency channel and n-1 high frequency channels are selected;
2. the value of correlation between the processing pixel and its neighboring pixels is used to detect edges in the image. More specifically, the value of said correlation is compared to the correlation values for the corresponding (by their location in the image) pixels in other n-1 high frequency channels and to the threshold value for this channel. The weighting coefficients for all pixels of n-1 high frequency channels are generated as a result of this comparison.
3. the output image is assembled by means of summing of each pixel from the low frequency channel and all the corresponding (by their location) pixels from n-1 high frequency channels multiplied by their weighting coefficients.

Concerning the first feature it should be noted that the extraction of the low frequency channel that is not a subject of any processing provides the distortion free reproduction of large-scale objects of the original image in the enhanced image, as these objects are passed through the low frequency channel without any processing. Therewithal the energy of noise passing through the low frequency channel without suppression is low as most of the noise energy is concentrated at high frequencies.

Furthermore, the extraction of the low frequency channel helps reduce the computation efforts needed to find correlation values for n-1 high frequency channels, as the subtraction of the local average value is required to compute correlation. This subtraction is made while extracting (subtracting from the original image) the low frequency channel.

The splitting of the original image into several high frequency channels helps improve, compared to selection of one or two channels, the noise suppression, as a noise associated with pixels of those frequency channels where edges were not found nearby, is prevented from contributing to the enhanced image.

Concerning the second feature it should be noted that edge detection by means of the correlation value between the processing pixel and its neighbors allows to find weak edges on a noisy background as the correlation value is close to zero for the typical noise, thereat the correlation values for adjacent pixels forming the edge are positive and of similar magnitude. This difference in correlation behavior helps achieve the high noise suppression combined with edge emphasis thus increasing the image sharpness and contrast.

The edge detection basing on the correlation between a processing pixel and its neighbors provides a quantitative measure of the edge intensity for each image pixel. This allows performing the selective emphasis of edges having certain intensity, for example, the weak edges. Furthermore, use of the correlation between the pixel and its neighbors makes the method of the present invention applicable to various types of images, including, for example, color and gray scale images, as well as three-dimensional images.

The third specific feature, namely assembling of the enhanced image by weighted summing of images from all frequency channels, helps to remove completely the effect of the selective noise emphasis. This effect is caused by selection of neighboring pixels from different frequency channels.

Furthermore, the determination of the threshold value by means of analysis of statistical distribution of pixels provides a high quality processing of images with materially different noise magnitudes without changing of parameters.

Furthermore, use of anisotropic frequency channels and anisotropic weights makes the image processing method highly sensitive to weak edges.

### BRIEF DESCRIPTION OF DRAWINGS

The claimed invention is illustrated by the drawings of the apparatus that implements the claimed method.

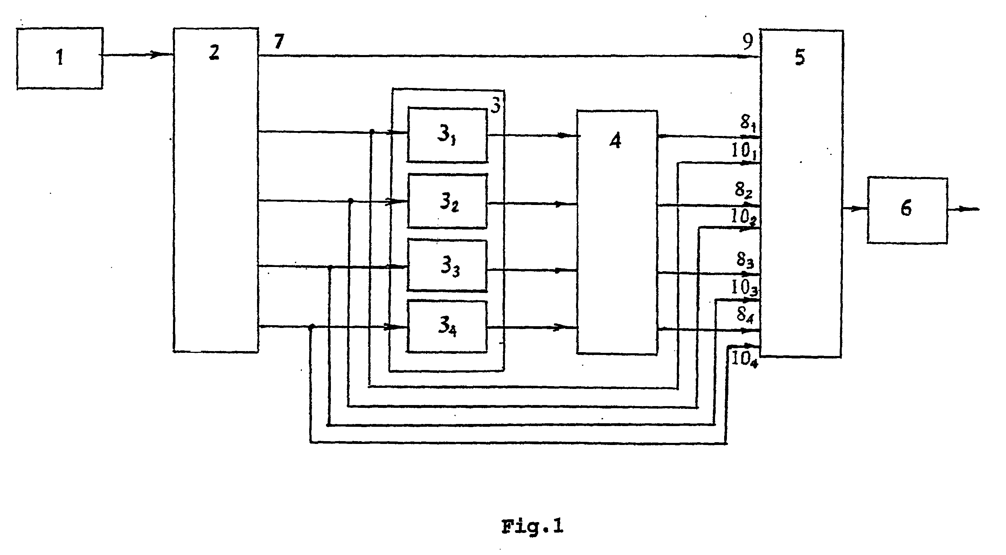

Fig.1 is a block diagram of the apparatus.

The preferred embodiment of the sub-units of said apparatus are shown in more details at Fig. 2 - 5:
Fig.2 is a block diagram of the frequency channel splitting unit (splitting unit).
Fig.3 is a block diagram of the unit for computation of correlations (correlation unit).
Fig.4 is a block diagram of the unit for forming of the weighting coefficients (weighting unit).
Fig.5 is a block diagram of the unit to assemble the output image (assembling unit).
Fig.6 shows an example of the pre-defined channel selection matrixes.
Fig.7 illustrates the operation of the frequency channel splitting unit.
Fig.8 is a graph showing an example of the dependence of the weighting coefficient on the correlation value.

Referring to Fig.1, the apparatus contains the image source 1, the output of said image source connected to the input of the splitting unit 2. The low frequency output 7 of said unit 2 is connected to the input 9 of the assembling unit 5, all other outputs of said splitting unit are connected to the corresponding inputs of the correlation unit 3, said other outputs are also connected to the inputs 10₁ - 10₄ of the assembling unit 5. The outputs of said correlation unit 3 are connected to the corresponding inputs of the weighting unit 4, the outputs of said weighting unit are the inputs 8₁ - 8₄ of the assembling unit 5. Thereat the output of said assembling unit 5 is connected to the input of the memory unit 6, the output of said memory unit is an output of the apparatus.

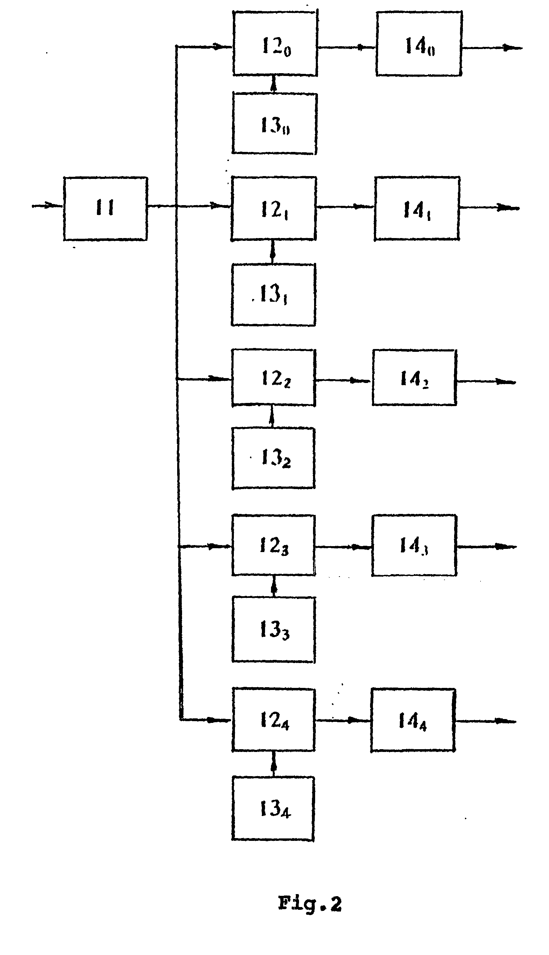

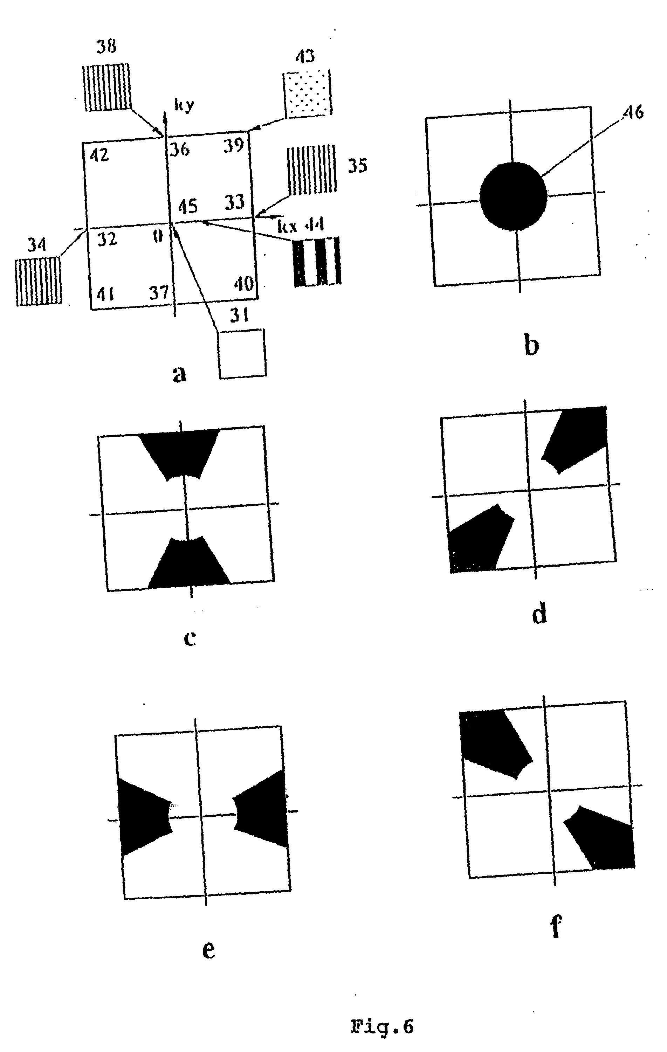

Fig.2 shows more in details the preferred embodiment of the splitting unit 2. It includes the direct Fourier processor 11, the input of said processor is connected to the output of image source 1, the output of said direct Fourier processor 11 is connected to the first inputs of matrix multiplicators 12₀ - 12₄ The second inputs of said multiplicators are connected to the corresponding memory units, said memory units hold the pre-defined channel selection matrixes illustrated at Fig.6. Any of the matrix multiplicators 12₀ - 12₄ performs the elemeat-by-element multiplication of matrixes supplied to its two inputs. The outputs of said matrix multiplicators 12₀ - 12₄ are connected to the inputs of the inverse Fourier processors 14₀ - 14₄. The output of the inverse Fourier processor 14₀ is connected to the input 9 of the assembling unit 5, and outputs of the inverse Fourier processors 14₁ - 14₄ are connected to the inputs 10₁ - 10₄ of the assembling unit as well as to the corresponding inputs of the correlation unit 3.

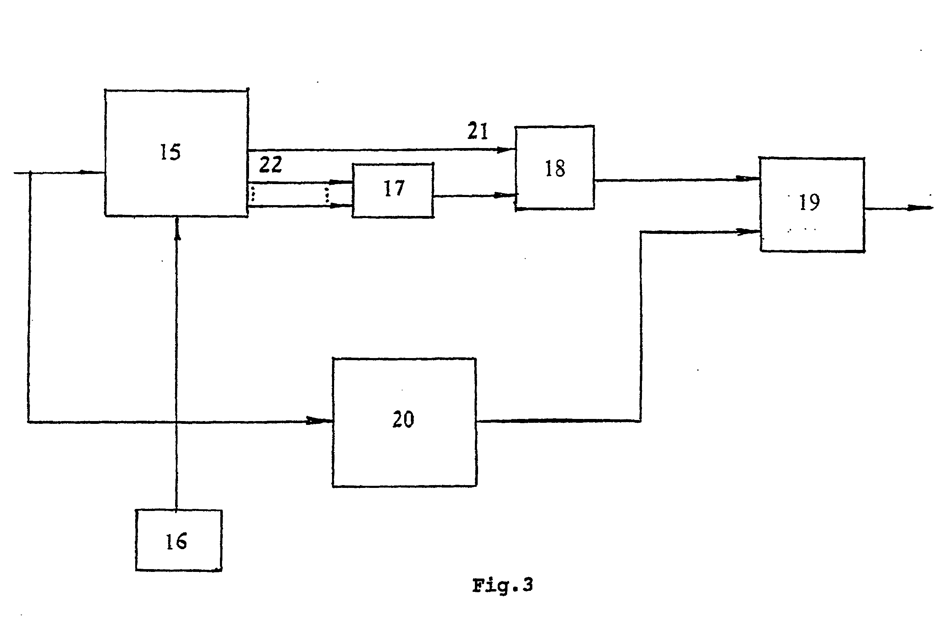

Fig.3 shows more in details the correlation unit 3. The memory unit 15 holds the image of the processing frequency channel. The input of said memory unit is the input of the correlation unit. It is connected also to the input of the noise level measuring unit 20, the output of said unit is connected to the first input of divider 19. The second input of said divider is connected to the output of multiplicator 18. The first input of said multiplicator is connected to the first output of the memory unit 15. Other outputs of said memory unit are connected to the weighting summator 17, the output of said weighting summator is the second input of multiplicator 18. The address input of the memory unit 15 is connected to the address generator 16. The output of divider 19 is the output of the correlation unit.

The noise level measuring unit 20 may be implemented according to the U.S. Patent No. 5,657,401, published on 12.08.97, Int. Class G06K 9/40.

All the memory units are of the random access memory type and they are well known in the art.

The weighting summator 17 may be implemented as eight scalar multiplicators (the number of said multiplicators is equal to the number of adjacent pixels). Any of said scalar multiplicators has two equal inputs and one output. The outputs of all said multiplicators are connected to the inputs of summator, the output of said summator is the output of unit 17. The first inputs of said multiplicators are the inputs of the unit 17 and the pre-defined weighting coefficients are supplied to the second inputs of said multiplicators.

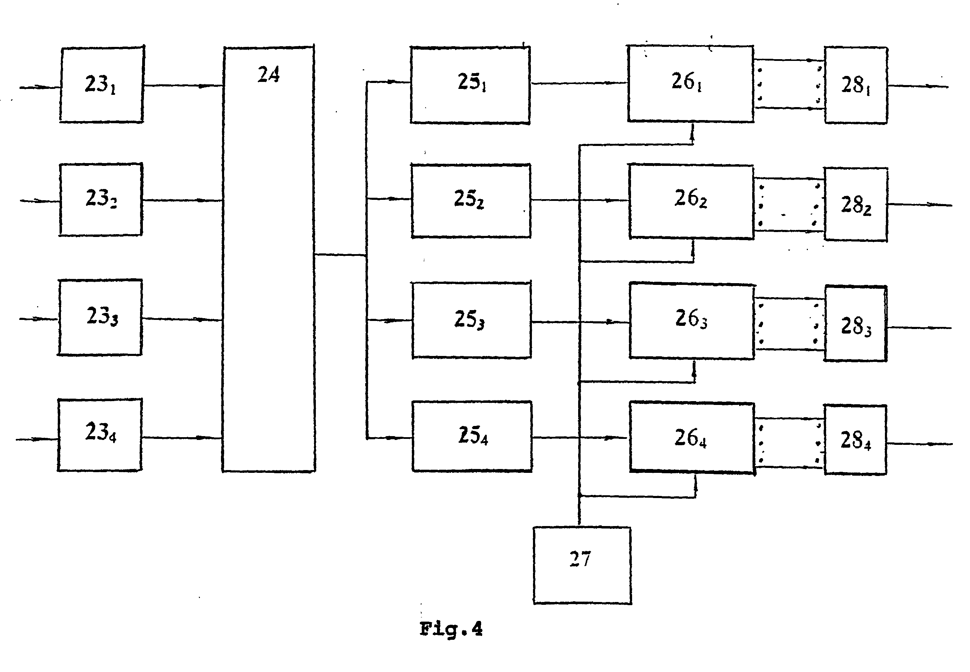

Fig.4 shows the weighting unit 4. The four inputs of the weighting unit 4 are the inputs of four rounding units 23₁ - 23₄, the outputs of said rounding units are connected to the inputs of the address assembling unit 24. The output of said unit 24 is connected to inputs of four look-up tables 25₁ - 25₄. The look-up table is a memory unit that stores the values of the weighting coefficient for any set of the four input correlation values. The outputs of the look-up tables 25₁ - 25₄ are connected to the inputs of the memory units 26₁ - 26₄, said memory units accumulate values of weighting coefficients. The address inputs of the memory units 26₁ - 26₄ are connected to the address generator 27 and the outputs of said memory units are connected to the inputs of summators 28₁ - 28₄ for averaging of weighting coefficients. The outputs of said summators are the outputs of the weighting unit 4.

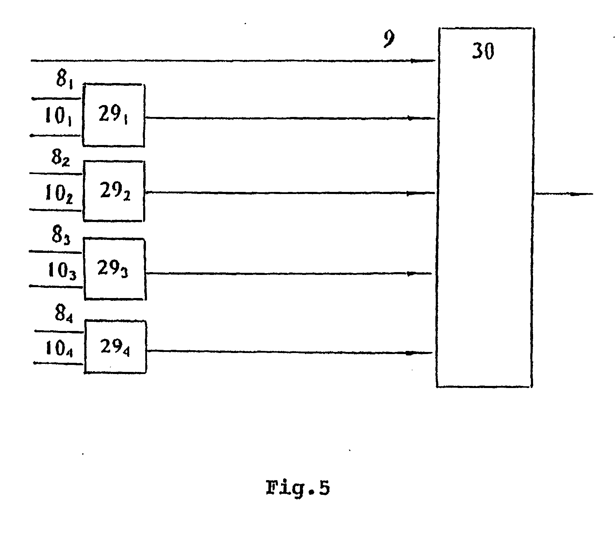

Fig.5 shows the assembling unit 5. It consists of four multiplicators 29₁ - 29₄ and summator 30. The first inputs 8₁ - 8₄ of said multiplicators are connected to the outputs of the weighting unit 4 and the second inputs 10₁ - 10₄ of said multiplicators are connected to the outputs of the splitting unit 2. The outputs of multiplicators 29₁ - 29₄ are connected to the corresponding inputs of the summator 30 and the input 9 of said summator is connected to the output 7 of the splitting unit 2. The output of summator 30 is connected to the input of the memory unit 6 that accumulates an enhanced image.

### BEST MODE FOR CARRYING OUT THE INVENTION

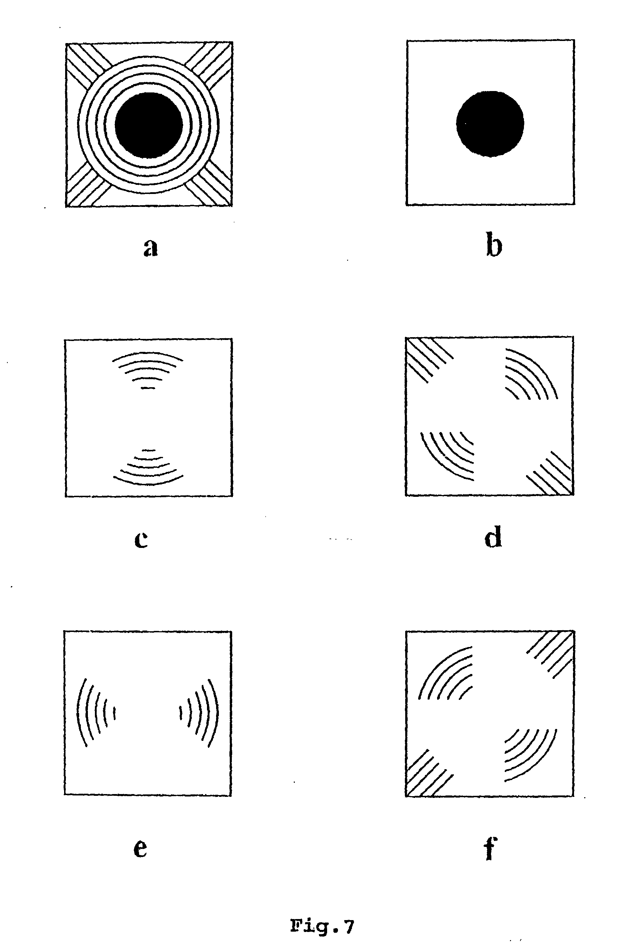

The apparatus implements the claimed method as it is described hereinafter. Referring to Fig.1, the input image is generated by the image source 1. The MRI unit may be used, for example, as an image source 1. Said MRI unit produces the image of the cross-section of an object, this image being a matrix containing discreet picture elements (pixels). Said image is carried to the input of the splitting unit 2. The operation of the splitting unit 2 is described with a reference to Fig.2 and Fig.7. The input image is transformed to the frequency presentation by the direct Fourier processor 11. Said frequency presentation contains the complete information about the original image and is represented by the matrix of the same size as an input image. This matrix is passed to identical matrix multiplicators 12₀ - 12₄, these matrix multiplicators perform the element-by-element multiplication of the frequency presentation of the original image by pre-defined channel selection matrixes. Said channel selection matrixes are stored in memory units 13₀ - 13₄. Each channel selection matrix contains the multipliers for all spatial frequencies of the frequency image presentation. Fig.6 shows the examples of the channel selection matrixes.

More specifically, as an image is presented by a 2D matrix, its frequency presentation is also a 2D matrix. Fig.6a shows schematically a frequency presentation matrix. The horizontal and vertical spatial frequencies vary along axes kₓ and k_{y}, respectively.

The zero spatial frequency corresponds to the constant image density. It is located at the crossing point (31) of axes kₓ and k_{y}.

Points 32 and 33 represent the largest spatial frequency in horizontal direction. The examples of images contributing to these points are shown in drawings 34 and 35.

Similarly, the maximal spatial frequency in the vertical direction is located at points 36 and 37; the example of image contributing to these points is illustrated by drawing 38.

The maximal spatial frequencies are located at points 39 - 42. The example of an image contributing to these maximal spatial frequencies is shown in drawing 43.

Medium spatial frequency in horizontal direction is located at point 45. The example of image contributing to this point is shown in drawing 44.

The location of the spatial frequencies in drawings Fig.6(b-f) corresponds to the scheme depicted in Fig.6a.

Fig.6b shows schematically the pre-defined selection matrix for the low frequency channel, said matrix being stored in the memory unit 13₀.

The dark area 46 is filled by the unit values of the matrix elements. This area corresponds to spatial frequencies that pass through the low frequency channel. The white region is filled by the zero values of the matrix elements, therefore the frequencies of the white region do not pass through the low frequency channel.

Fig.6(c-f) show schematically the selection matrixes for four high frequency channels, thereat the same notations as in Fig.6b are used.

It should be noted that the sum of all channel selection matrixes Fig.6(b-f) is the matrix with all elements equal to 1. Therefore all the information from the original image passes through at least one channel.

Referring to Fig.2, each of the matrix multiplicators 12₀ - 12₄ forms on its output the matrix of the corresponding frequency channel in the frequency presentation. The inverse Fourier processors 14₀ - 14₄ transform said matrixes to the coordinate presentation.

The direct Fourier processor 11 and inverse Fourier processors 14₀ - 14₄ may be implemented basing on the Fast Fourier Transform algorithm as described, for example, in: Cooley, J.M., Lewis, P.A.W. and Welch, P.D. (1969) The finite Fourier transform. I.E.E.E. Trans. Audio Electroacoustics AU-17, 2, 77-86.

Fig.7 further illustrates operation of the splitting unit. Fig.7a shows the example of an input image, Fig.7(b-f) show the images formed on outputs of the inverse Fourier processors 14₀ - 14₄, respectively, as a result of processing of the image shown in Fig.7a. The image of a low frequency channel 7b is carried from the output of the Fourier processor 14₀, being the output 7 of the splitting unit 2, to the input 9 of the assembly unit. The images of four high frequency channels are carried from the outputs of the Fourier processors 14₁ - 14₄, being another outputs of the splitting unit 2, to the corresponding inputs of the correlation unit 3 and to the inputs 10₁ - 10₄ of the assembly unit 5.

The further processing of these images will be described on example of one high frequency channel as said processing is identical in all high frequency channels.

Referring to Fig.3, the memory unit 15 stores the partial image of the processing channel. To compute the unnormalized correlation value, the center pixel value 21 and values of its neighboring pixels 22 are sequentially selected from the memory 15. Said values of neighboring pixels pass to the input of weighting summator 17, said summator implements the following operation on pixel values: 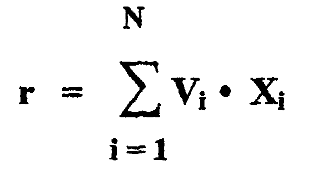 where N is a number of pixels in neighborhood 22 of the central pixel (preferably N=8), Vᵢ are the pre-defined weighting coefficients (preferably Vᵢ=1/8) and Xᵢ are the pixel values from neighborhood 22. The multiplicator 18 forms a product of the weighted sum of neighboring pixels and the central pixel value. This product is the unnormalized correlation value for the processing pixel. It is compared to the threshold value by dividing by said threshold value (output of the noise level measuring means 20) in divider 19. The result of said division is compared to 1.0 in the weighting unit 4. The processing described herein is repeated for all pixels of the partial image of the processing frequency channel.

The image of this frequency channel passes also to the noise level measuring means 20. The noise level from the output of means 20 is used as a threshold value to normalize correlation values by divider 19. As a result, the matrix containing the correlation values for all pixels of the processing frequency channel is formed on output of the correlation unit 3, said correlation values being normalized by the threshold value for the processing frequency channel.

The correlation values formed by the correlation unit 3 are carried to the weighting unit 4. Referencing to Fig.4, said correlation values for four frequency channels pass to inputs of the rounding means 23₁ - 23₄. Said rounding means decrease the data precision to 4 or 5 bits.

The four rounded values from outputs of means 23₁ - 23₄, each containing 4 or 5 bits, are assembled into one 16 or 20 bit word by the address assembling unit 24. The formed address is used as an input value for four look up tables 25₁ - 25₄. Each of said look up tables is a memory unit that stores values of the weighting coefficients for any combination of four correlation values in four frequency channels, thereat such combination defines the address formed by the unit 24 in a unique way.

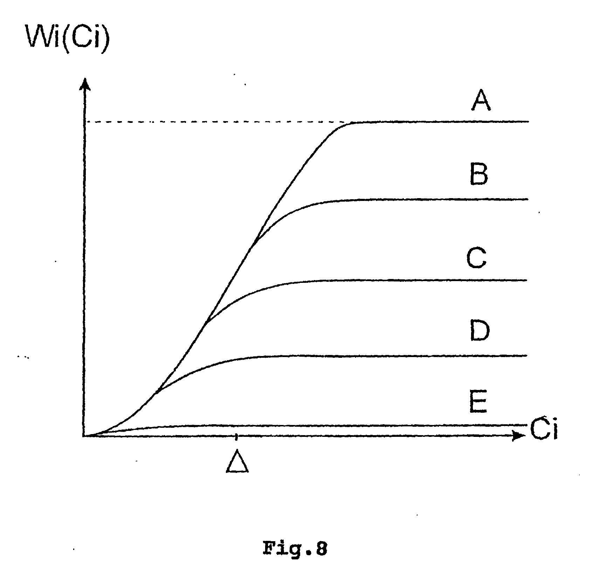

Fig.8 shows the preferred dependence of the weighting coefficient Wᵢ in any of the frequency channels on the correlation value Cᵢ in this channel and correlation values in other three channels, where Δ stands for the threshold value for this frequency channel. The weight Wᵢ depends on the correlation value Cᵢ and maximal correlation value L in other three frequency channels. This dependence is illustrated at Fig.8 by the curves:
curve A for Cᵢ ≥ 0.7 L,
curve B for Cᵢ = 0.5 L,
curve C for Cᵢ = 0.3 L,
curve D for Cᵢ = 0.1 L and
curve E for Cᵢ = 0.01 L.

The memory units 26₁ - 26₄ accumulate values of the weighting coefficients generated by look up tables 25₁ - 25₄. The address generator 27 and summators 28₁ - 28₄ smooth said weighting coefficients in each frequency channel. Said smoothing is obtained by summing in the summator (for example, 28₁) the center value of the coefficient and its neighboring values being sequentially selected from the memory unit (for example, 26₁) by the address generator 27. The smoothed values of weighting coefficients formed on outputs of summators (for example, 28₁) pass to the outputs of the weighting unit 4.

The operation of the assembling unit is described with a reference to Fig.5. The values of weighting coefficients for four frequency channels pass from the outputs of the unit 4 to the inputs 8₁ - 8₄ of multiplicators 29₁ - 29₄ and the pixel values of the corresponding frequency channels are carried from outputs of the splitting unit 2 to another inputs 10₁ - 10₄ of said multiplicators. The products of said pixel values by the corresponding weighting coefficients generated by multiplicators pass to the inputs of the summator 30. Thereto the corresponding pixel value of the low frequency channel passes to the input 9 of said summator. Thereby the summator 30 calculates the value of the target pixel of the output image, said pixels are accumulated in the memory unit 6.

The embodiment described herein illustrates the method as applied to 2D scalar images. It is understood however that the claimed method may be applied similarly to 3D images. In this case, in the apparatus used to implement the claimed method: the number of frequency channel increases, the 3D Fourier processors are used instead of 2D ones and the number of neighboring pixels (used, for example, to compute a correlation value) is 26 instead of 8.

The claimed method may be applied also to processing of vector images, particularly the color images. Thereat, the 3 components of a vector presenting a pixel value may correspond for example to the intensity of the 3 basic colors for this pixel. In this case, the scalar operations on pixel values, like Fourier transform and summing, are replaced by the corresponding vector operations as it is known in the art and the correlation is computed as a scalar product of the center pixel value and the weighted vector sum of its neighbors, thereat the vector summator contains as many scalar summators as the number of vector components.

### INDUSTRIAL APPLICABILITY

The image processing method according to the invention has the following advantages.

First, use of the correlation between the processing pixel and its neighboring pixels helps detect weak edges against a noisy background. This feature provides high noise suppression in conjunction with the emphasis of weak edges, thus significantly improving the image quality.

Furthermore, use of correlation between the processing pixel and its neighbors makes the method applicable to a wide variety of image types, including color images, gray scale images and 3D images.

Second, the determination of the threshold value by analysis of distribution of pixel values provides a high quality processing of images with the material difference in their noise levels without changing of parameters.

Third, the distortion-free reproduction of the large-scale image structures is achieved due to the separation of the low frequency channel.

## Claims

1. The image processing method, comprising the presentation of the original image as a matrix of the discreet picture elements (pixels), splitting of the original image into n frequency channels, each channel presented by an image matrix of the same size as the original image, the detection of edges, and assembling of the output image from said n frequency channels taking the detected edges into account, **CHARACTERIZED BY** splitting of the original image into the low frequency channel and n-1 high frequency channels and detection of edges by computation in each of n-1 selected high frequency channels for each pixel of the correlation between processing pixel and its neighboring pixels followed by comparison of said correlation value with correlation values for the corresponding pixels in other high frequency channels and with the threshold value for this channel; basing on the results of said comparison, the weighting coefficients are formed for each pixel of each of n-1 high frequency channels, and the assembly of the output image is made by summing each pixel from the low frequency channel with all the corresponding pixels of n-1 high frequency channels multiplied by their weighting coefficients.

2. The method according to claim 1, **CHARACTERIZED BY** determination of said weighting coefficient for each pixel of each of n-1 high frequency channels by comparison of the corresponding correlation value to the threshold value.

3. The method according to claim 2, **CHARACTERIZED BY** the specific dependence of the weighting coefficient on the correlation and threshold values:
- the weighting coefficient takes a minimal value for correlation values that are significantly smaller than the threshold value;
- the weighting coefficient smoothly increases from its minimal value to its maximal value for correlation values that are close to the threshold value;
- the weighting coefficient takes its maximal value for correlation values that are significantly larger than the threshold value.

4. The method according to claim 2, **CHARACTERIZED BY** the specific dependence of the weighting coefficient on the correlation and threshold values:
- the weighting coefficient takes a minimal value for correlation values that are significantly smaller than the threshold value;
- the weighting coefficient smoothly increases from its minimal value to its maximal value while the correlation value increases to the second threshold value, said second threshold value is equal to the product of the first threshold value by a pre-defined coefficient;
- the weighting coefficient smoothly decreases from its maximal value to its limit value while correlation value is larger than the second threshold value.

5. The method according to claim 1, **CHARACTERIZED BY** m of said n-1 high frequency channels, where 2<=m<=n-1, being different one from another in the direction of their principal passing only.

6. The method according to claim 5, **CHARACTERIZED BY** determination of said weighting coefficient for each pixel of each of m high frequency channels by comparison of the corresponding correlation value to the threshold value and to the correlation values for corresponding (by their location in the image) pixels of other m-1 high frequency channels.

7. The method according to claim 1, **CHARACTERIZED BY** the picture element (pixel) being represented by a scalar value **characterizing,** for example, the image intensity at the corresponding pixel.

8. The method according to claim 7, **CHARACTERIZED BY** computation of said correlation value for each pixel by multiplication of said pixel value by the weighted sum of its neighboring pixels.

9. The method according to claims 8 and 5, **CHARACTERIZED BY** use of anisotropic weights for computation of said weighted sum of the neighboring pixels, thereat the direction of said anisotropy corresponds to the direction of principal passing for the processing frequency channel.

10. The method according to claim 7, **CHARACTERIZED BY** determination of said threshold value for each of said n-1 high frequency channels by analysis of distribution of pixel values in an image of the processing frequency channel.

11. The method according to claim 7, **CHARACTERIZED BY** determination of said threshold value for all said frequency channels by analysis of distribution of pixel values of the original image.

12. The method according to claim 1, **CHARACTERIZED BY** the picture element (pixel) being represented by a vector, components of said vector **characterizing,** for example, the intensity of the basic colors (red, green and blue) at the corresponding pixel.

13. The method according to claim 12, **CHARACTERIZED BY** computation of said correlation value for each pixel as a scalar product of said pixel vector by the weighted sum of vectors representing its neighboring pixels.

14. The method according to claims 13 and 5, **CHARACTERIZED BY** use of anisotropic weights for computation of said weighted sum of the neighboring pixels, thereat the direction of said anisotropy corresponds to the direction of principal passing for the processing frequency channel.

15. The method according to claim 12, **CHARACTERIZED BY** determination of said threshold value for each of said n-1 high frequency channels by analysis of distribution of absolute values of vectors representing pixels of an image of the processing frequency channel.

16. The method according to claim 12, **CHARACTERIZED BY** determination of said threshold values for all high frequency channels by analysis of distribution of absolute values of vectors representing pixel values of the original image.

17. The method according to claim 1, **CHARACTERIZED BY** smoothing of the correlation values for several neighboring pixels before computation of the weighting coefficients, said smoothing being implemented at least in one of n-1 high frequency channels.

18. The method according to claim 17, **CHARACTERIZED BY** non linear transformation of the correlation values prior to the smoothing of the correlation values, said non linear transformation remains unchanged the values that are smaller or close to the threshold value, and decreases correlation values that are significantly larger than the threshold value.

19. The method according to claim 1, **CHARACTERIZED BY** smoothing of the weighting coefficients over several neighboring pixels, said smoothing being implemented at least in one of n-1 high frequency channels.

20. The method according to claim 1 **CHARACTERIZED BY** the input image being p dimensional matrix of picture elements, where p is greater or equal to 3.

21. The method according to claim 1, **CHARACTERIZED BY** use of different threshold values for different parts of the image, said different threshold values being used to form the weighting coefficients at least in one of n-1 high frequency channels.

22. The method according to claims 7 and 21, **CHARACTERIZED BY** determination of said threshold values for different parts of the image and different high frequency channels by the analysis of distribution of pixel values in the corresponding part of the image of the corresponding frequency channel.

23. The method according to claims 12 and 21, **CHARACTERIZED BY** determination of said threshold values for different parts of the image and different frequency channels by the analysis of distribution of absolute values of vectors representing pixels in the corresponding part of the image of the corresponding frequency channel.

## Patentansprüche

1. Das Verfahren zur Bildverarbeitung, daß auf der Darstellung des Ausgangsbildes in Form einer Matrix der diskreten Bildelemente (Pikseln), auf der Aufteilung des Ausgangsbildes in n Frequenzkanäle, dabei enthält jedes davon eine Matrix dergleichen Größe wie das Ausgangsbild, auf der Ermittlung von Bildgrenzen und auf der Formierung des Endbildes aus den obengenannten n Frequenzkanäle unter Berücksichtigung der ermittelten Grenzen stützt, ***gekennzeichnet* dadurch, daß** bei der Aufteilung des Bildes in die Frequenzkanäle ein Niederfrequenzkanal und n-1 Hochfrequenzkanäle abgetrennt werden, zur Abtrennung der Grenzen wird in jedem der n-1 Hochfrequenzkanäle für jedes Bildelement die Korrelation zwischen dem verarbeitenden Bildelement und den es umkreisenden Bildelementen berechnet, der berechnete Korrelationswert wird mit der Korrelationswerten für entsprechende Bildelemente in anderen Frequenzkanälen und mit dem Schwellenwert für dieses Kanal verglichen, nach den Vergleichsergebnissen wird für jedes Bildelement jedes der n-1 Hochfrequenzkanäle ein Gewichtskoeffizient gefonnt, und die Formierung des Endbildes erfolgt durch die Addierung jedes der Bildelmente des Niederfrequenzkanals mit allen entsprechenden Bildelementen der n-1 Hochfrequenzkanäle, multipliziert mit ihnen entsprechenden Gewichtskoeffizienten.

2. Das Verfahren nach Anspruch 1 **dadurch *gekennzeichnet*, daß** der Gewichtskoeffizient für jedes Bildelement jedes der n-1 Hochfrequenzkanäle durch den Vergleich des entsprechenden Korrelationswertes mit dem Schwellenwert bestimmt wird.

3. Das Verfahren nach Anspruch 2 **dadurch *gekennzeichnet*, daß** der Gewichtskoeffizient mit dem Korrelationswert und mit dem Schwellenwert wie folgt verbunden ist:
- Gewichtskoeffizient ist minimal, wenn der Korrelationswert wesentlich niedriger als der Schwellenwert ist;
- Gewichtskoeffizient steigt monoton von dem minimalen bis hin zu dem maximalen Wert an, wenn der Korrelationswert mit dem Schwellenwert vergleichbar ist;
- Gewichtskoeffizient ist maximal, wenn der Korrelationswert wesentlich größer als der Schwellenwert ist.

4. Das Verfahren nach Anspruch 2 **dadurch *gekennzeichnet,* daß** der Gewichtskoeffizient mit dem Korrelationswert und mit dem Schwellenwert wie folgt verbunden ist:
- Gewichtskoeffizient ist minimal, wenn der Korrelationswert wesentlich niedriger als der Schwellenwert ist;
- Gewichtskoeffizient steigt monoton von dem minimalen bis hin zu dem maximalen Wert an, wenn der Korrelationswert bis zu zweitem Schwellenwert anwächst, der dem Produkt des Schwellenwertes mit dem vorbestimmten Koeffizient gleich ist;
- Gewichtskoeffizient nimmt monoton von dem maximalen Wert bis hin zu dem Grenzwert ab, wenn der Korrelationswert größer als der zweite Schwellenwert ist.

5. Das Verfahren nach Anspruch 1 **dadurch *gekennzeichnet*, daß** m aus n-1 Hochfrequenzkanäle, wo 2 ≤ m ≤ n-1, sich nur durch die haupsächliche Durchlaßichtung voneinander unterscheiden.

6. Das Verfahren nach Anspruch 5 **dadurch *gekennzeichnet*, daß** der Gewichtskoeffizient für jedes Bildelement jedes der m Hochfrequenzkanäle durch den Vergleich des entsprechenden Korrelationswertes mit dem Schwellenwert und mit den Korrelationswerten für die nach der Lage entsprechende Bildelemente in den anderen m-1 Hochfrequenzkanäle bestimmt wird.

7. Das Verfahren nach Anspruch 1 **dadurch *gekennzeichnet*, daß** das Bildelement (Piksel) eine Zahl darstellt, die z.B. die Schärfe des entsprechenden Bildpunktes kennzeichnet.

8. Das Verfahren nach Anspruch 7 **dadurch *gekennzeichnet,* daß** der Korrelationswert für jedes Bildelement durch die Multiplikation dieses Bildelementes mit der gewogenen Summe der benachbarten Bildelemente berechnet wird.

9. Das Verfahren nach Ansprüchen 8 und 5 **dadurch *gekennzeichnet,* daß** bei der Berechnung der gewogenen Summe der benachbarten Bildelemente anisotrope Gewichte benutzt werden, dabei entspricht die Richtung der Anisotropie der hauptsächlichen Richtung des verarbeitenden Frequenzkanals.

10. Das Verfahren nach Anspruch 7 **dadurch *gekennzeichnet,* daß** der Schwellenwert für jedes der n-1 Hochfrequenzkanäle durch die Auswertung der Zuordnungen von Werte der Bildelemente dieses Frequenzkanals bestimmt wird.

11. Das Verfahren nach Anspruch 7 **dadurch *gekennzeichnet,* daß** die Schwellenwerte für alle Frequenzkanäle durch die Auswertung der Zuordnungen von Werte der Bildelemente des Ausgangsbildes bestimmt wird.

12. Das Verfahren nach Anspruch 1 **dadurch *gekennzeichnet,* daß** das Bildelement ein Vektor darstellt, dessen Komponente z.B. die Helligkeit der drei Hauptfarben (rot, grün, blau) kennzeichnen.

13. Das Verfahren nach Anspruch 12 **dadurch *gekennzeichnet*, daß** der Korrelationswert für jedes Bildelement durch die skalare Multiplikation dieses Bildelementes mit der gewogenen Summe der benachbarten Bildelemente berechnet wird.

14. Das Verfahren nach Ansprüchen 13 und 5 **dadurch *gekennzeichnet*, daß** bei der Berechnung der gewogenen Summe der benachbarten Bildelemente anisotrope Gewichte benutzt werden, dabei entspricht die Richtung der Anisotropie der hauptsächlichen Durchlaßrichtung des verarbeitenden Frequenzkanals.

15. Das Verfahren nach Anspruch 12 **dadurch *gekennzeichnet*, daß** der Schwellenwert für jedes der n-1 Hochfrequenzkanäle durch die Auswertung der Zuordnungen von absoluten Vektorengrößen, die die Bildelemente dieses Frequenzkanals darstellen, bestimmt wird.

16. Das Verfahren nach Anspruch 12 **dadurch *gekennzeichnet,* daß** der Schwellenwert für alle Hochfrequenzkanäle durch die Auswertung der Zuordnungen von absoluten Vektorengrößen, die die Bildelemente dieses Frequenzkanals darstellen, bestimmt wird.

17. Das Verfahren nach Anspruch 1 **dadurch *gekennzeichnet,* daß** vor der Berechnung der Gewichtskoeffizienten mindestens in einem der n-1 Hochfrequenzkanäle die Ausgleichung der Korrelationswerte für einige benachbarte Bildelemente durchgeführt wird.

18. Das Verfahren nach Anspruch 17 **dadurch *gekennzeichnet*, daß** vor der Mittelung der Korrelationswerte die unlineare Umformung der Korrelationen auf solche Weise durchgeführt wird, daß die Werte, die niedriger als Schwellenwert oder vergleichbar mit dem Schwellenwert sind, unverändert bleiben, und die Werte, die wesentlich größer als Schwellenwert sind, vermindert werden.

19. Das Verfahren nach Anspruch 1 **dadurch *gekennzeichnet*, daß** bei der Formierung des Gewichtskoeffizientes mindestens in einem der n-1 Hochfrequenzkanäle die Ausgleichung dieses Gewichtskoeffizientes nach einigen benachbarten Bildelementen durchgeführt wird.

20. Das Verfahren nach Anspruch 1 **dadurch *gekennzeichnet,* daß** das Ausgangsbild eine Matrix der Bildelementen der Dimension p darstellt, wo p ≥ 3.

21. Das Verfahren nach Anspruch 1 **dadurch *gekennzeichnet,* daß** für die Formierung des Gewichtskoeffizientes mindestens in einem der n-1 Hochfrequenzkanäle die unterschiedliche Schwellenwerte für unterschiedliche Bildteile benutzt werden.

22. Das Verfahren nach Ansprüchen 7 und 21 **dadurch *gekennzeichnet*, daß** Schwellenwerte für unterschiedliche Bildteile und für verschiedene Frequenzkanäle durch die Auswertung der Zuordnungen von Werten der entsprechenden Bildteilen des entprechenden Frequenzkanals bestimmt werden.

23. Das Verfahren nach Ansprüchen 12 und 21 **dadurch *gekennzeichnet*, daß** die Schwellenwerte für unterschiedliche Bildteile und für verschiedene Frequenzkanäle durch die Auswertung der Zuordnungen von absoluten Vektorgrößen der entsprechenden Bildteilen des entprechenden Frequenzkanals bestimmt werden.

## Revendications

1. Le procédé du traitement de l'image fondé sur la presentation de l'image première comme une matrice des pixels discrets; le partage de l'image première en **n** voies de fréquence, dont chacune contient la matrice de même dimension que l'image première; le dégagement des frontières de l'image et la formation de l'image de sortie de **n** voies de fréquence indiquées ci-dessus en tenant compte des frontières dégagées, **se distinguant** par le fait, que pendant le partage de l'image en voies de fréquence on dégage une voie de basse fréquence et (n-1) voies de haute fréquence, pour le dégagement des frontières dans chaque (n-1) voies de haute fréquence pour chaque pixel on calcule la valeur de la corrélation entre le pixel traité et les pixels qui l'entourent, compare la valeur de la corrélation obtenue avec les valeurs de la corrélation pour les pixels corréspondants dans les autres voies de fréquence et avec la valeur seuil pour la voie donnée, selon les résultats de la comparaison forme le coefficient de pondération pour chaque pixel de chaque de (n-1) voies de haute fréquence et forme l'image de sortie à l'aide de la sommation de chaque pixel de la voie de basse fréquence avec tous les pixels corréspondants de (n-1) voies de haute fréquence multipliés aux coefficients de pondération corréspondants.

2. Le procédé selon p. 1 **se distinguant** par le fait, qu'on détermine le coefficient de pondération pour chaque pixel de chaque de (n-1) voies de haute fréquence à l'aide de la comparaison de la valeur corréspondante de la corrélation avec la valeur seuil.

3. Le procédé selon p. 2 **se distinguant** par le fait, que le coefficient de pondération est lié à la valeur de la corrélation et la valeur seuil de la manière suivante:
- le coefficient de pondération est minimum, si la valeur de la corrélation est essentielement plus basse que la valeur seuil;
- le coefficient de pondération augmente d'une manière monotone de la valeur minimum jusqu'à la valeur maximale, si la valeur de la corrélation est comparable avec la valeur seuil;
- le coefficient de pondération est maximale, si la valeur de la corrélation est essentielement plus élevée que la valeur seuil

4. Le procédé selon p. 2 **se distinguant** par le fait, que le coefficient de pondération est lié à la valeur de la corrélation et la valeur seuil de la manière suivante:
- le coefficient de pondération est minimum, si la valeur de la corrélation est essentielement plus basse que la valeur seuil;
- le coefficient de pondération augmente d'une manière monotone de la valeur minimum jusqu'à la valeur maximale, si la valeur de la corrélation augmente jusqu'à la deuxième valeur seuil égale au produit de la valeur seuil et du coefficient prédéterminé;
- le coefficient de pondération diminue d'une manière monotone de la valeur maximale jusqu'à la valeur seuil, si la valeur de la corrélation est plus élevée que la deuxième valeur seuil.

5. Le procédé selon p. 1 **se distinguant** par le fait, que **m** de **(n-1)** voies de haute fréquence, où **2 ≤ m** ≤ **n-1,** ne se distinguent que par la direction de la transmission principale.

6. Le procédé selon p. 5 **se distinguant** par le fait, qu'on détermine le coefficient de pondération pour chaque pixel de chaque **m** voies de haute fréquence par la comparaison de la valeur corréspondante de la corrélation avec la valeur seuil et les valeurs de la corrélation des pixels corréspondant par les positions de **m-1** voies de fréquence restantes.

7. Le procédé selon p. 1 **se distinguant** par le fait, que le pixel représente un seul nombre, qui caractèrise, par exemple, la brilliance du point correspondant de l'image.

8. Le procédé selon p. 7 **se distinguant** par le fait, qu'on calcule la valeur de la corrélation pour chaque pixel par la multiplication de ce pixel par la somme pondérée des pixels voisins.

9. Le procédé selon p. 8 et p. 5 **se distinguant** par le fait, qu'on utilise des poids anisotropiques pendant la calculation de la somme pondérée des pixels voisins, la direction de l'anisotropie correspondant à la direction de la transmission principale de la voie de fréquence traitée.

10. Le procédé selon p. 7 **se distinguant** par le fait, qu'on détermine la valeur seuil pour chaque de (n-1) voies de haute fréquence à l'aide de l'analyse de la répartition des valeurs des pixels de cette voie de fréquence.

11. Le procédé selon p. 7 **se distinguant** par le fait, qu'on détermine les valeurs seuils pour toutes les voies de haute fréquence à l'aide de l'analyse de la répartition des valeurs des pixels de l'image première.

12. Le procédé selon p. 1 **se distinguant** par le fait, que le pixel c'est un vecteur, dont les composants **caractérisent**, par exemple, les brillances des trois couleurs primitives (rouge, vert, bleu).

13. Le procédé selon p. 12 **se distinguant** par le fait, qu'on calcule la valeur de la corrélation pour chaque pixel par la multiplication scalaire de ce pixel à la somme ponderée des pixels voisins.

14. Le procédé selon p. 13 et p. 5 **se distinguant** par le fait, que pendant la calculation de la somme pondérée des pixels voisins on utilise les poids anisotropiques, la direction de l'anisotropie correspondant à la direction de la transmission principale de la voie de fréquence traitée.

15. Le procédé selon p. 12 **se distinguant** par le fait, qu'on détermine la valeur seuil pour chaque de (n-1) voies de haute fréquence à l'aide de l'analyse de la répartition des valeurs absolues des vecteurs, représentant les pixels de cette voie de fréquence.

16. Le procédé selon p. 12 **se distinguant** par le fait, qu'on détermine les valeurs seuils pour toutes les voies de haute fréquence à l'aide de l'analyse de la répartition des valeurs absolues des vecteurs représentant les pixels de l'image première.

17. Le procédé selon p. 1 **se distinguant** par le fait, qu'avant de calculer des coefficients de pondération on fait l'aplanissement des valeurs de la corrélation pour plusieurs pixels voisins au moins dans une de (n-1) voies de haute fréquence.

18. Le procédé selon p. 17 **se distinguant** par le fait, qu'avant d'aplanir les valeurs de corrélation on fait la transformation non-tinéaire des corrélations de telle manière que les valeurs plus petites ou comparables avec la valeur seuil restent inchangées, et les valeurs plus grandes diminuent.

19. Le procédé selon p. 1 **se distinguant** par le fait, que pendant la formation du coefficient de pondération on fait l'aplanisseme de ce coefficient dans les pixels voisins au moins dans une de (n-1) voies de haute fréquence.

20. Le procédé selon p. 1 **se distinguant** par le fait, que l'image première représente une matrice des pixels de la dimension p, où p ≥ 3.

21. Le procédé selon p. 1 **se distinguant** par le fait, que pour la formation du coefficient de pondération au moins dans une de (n-1) voies de haute fréquence on utilise les valeurs seuils différantes pour les parties de l'image différantes.

22. Le procédé selon p. 7 et p. 21 **se distinguant** par le fait, qu'on détermine les valeurs seuils pour les parties de l'image différantes et pour les voies de fréquence différantes à l'aide de l'analyse de la répartition des valeurs des pixels de l'image correspondants de la voie de fréquence correspondante.

23. Le procédé selon p. 12 et p. 21 **se distinguant** par le fait, qu'on détermine les valeurs seuils pour les parties de l'image differantes et pour les voies de fréquence differantes à l'aide de l'analyse de la répartition des valeurs absolues des vecteurs représentant les pixels de l'image correspodants de la voie de fréquence corréspondante.
